# FASCICULE DE BREVET EUROPEEN

(11) **EP 0 433 116 B1**
(45) Date de publication et mention de la délivrance du brevet: **14.09.1994**
(21) Numéro de dépôt: 90403227.3
(22) Date de dépôt: 14.11.1990
(51) Int. Cl.: H02B 1/50

(54) **Poste de distribution d'eau et/ou de gaz et/ou de carburant et/ou d'électricité et/ou de tout autre fluide**
Verteilerstation für Wasser und/oder Gas, Brennstoff, Elektrizität und jede andere Flüssigkeit
Distribution station for water and/or gas, fuel, electricity, and/or any other fluid

(30) Priorité: 15.11.1989 FR 8915148
(43) Date de publication de la demande: 19.06.1991
(73) Titulaire: LACROIX INDUSTRIES S.A., F-44800 Saint Herblain (FR)
(72) Inventeur: Frouin, Daniel, F-44810 Heric (FR)
(74) Mandataire: Dawidowicz, Armand

(56) Documents cités:
- WO-A-81/02495
- US-A- 4 785 376
- 123 Engineering no. 8, septembre 1988, London, GB page 407 N.Jeffery: "Keeping marinas tidy"

## Description

L'invention concerne un poste de distribution d'eau et/ou de gaz et/ou de carburant et/ou d'électricité et/ou de tout autre fluide anti-vandalisme, inviolable, à dispositif de paiement du service rendu. (voir WO-A- 8102495).

Il convient, avant d'aborder les disposition principales de l'invention de rappeler les difficultés rencontrées à l'occasion de la distribution d'eau et d'électricité, en particulier pour les gens du voyage qui stationnent temporairement sur les aires autorisées aménagées ou non à cet effet.

On connaît déjà un certain nombre de postes dénommés le plus souvent par bornes de distribution telles que celles qui équipent les ports de plaisance. Ces bornes, à disposition des usagers des ports de plaisance comportent le plus souvent un robinet ou vanne de distribution d'eau ainsi qu'une prise d'électricité. Sur de telles bornes l'accès au robinet ou la prise est libre, le coût de la consommation étant géré par le responsable du port ou de la marina et débité aux usagers. De telles bornes sont inadaptées aux aires de stationnement réservées aux gens du voyage car leur conception et le paiement du service rendu n'est pas en adéquation avec les contraintes auxquelles elles sont soumises en raison notamment de l'absence de gardiennage.

Dans les terrains d'accueil pour gens du voyage, mis à disposition le plus souvent par les municipalités, on ne sait pas gérer, faute de moyen approprié, la consommation d'eau et d'électricité, au delà d'un paiement forfaitaire pour un temps limité. Il en résulte des consommations incontrôlées à la charge des communes, répercutées sur les habitants sédentaires ce qui crée des conflits entre administrés sédentaires et municipalités, tendant au rejet d'accueil des gens du voyage.

On est donc à la recherche d'un poste de distribution d'eau et d'électricité qui répond notamment aux exigences techniques et économiques spécifiques à leur application aux terrains réservés aux gens du voyage, mais non exclusivement, comme par exemple les petits terrains de camping municipaux sans personnel, les haltes communales,...

L'invention concerne à cet effet un poste de distribution d'eau et/ou de gaz et/ou de carburant et/ou d'électricité et/ou de tout autre fluide notamment pour aires de stationnement telles que terrains de camping, haltes communales, terrains réservés aux gens du voyage, et en particulier les aires de stationnement sans gardiennage, poste de distribution caractérisé en ce qu'il comporte une enceinte anti-vandalisme abritant au moins un distributeur d'eau ou de gaz ou de carburant ou de tout autre fluide et/ou un distributeur d'électricité, ledit distributeur d'eau ou de gaz ou de carburant ou de tout autre fluide comprenant une vanne ou robinet alimenté par un dispositif de contrôle de débit autorisé par un moyen de commande correspondant à la contre-partie du paiement du service rendu, ledit distributeur d'électricité débitant également sous l'action d'un moyen de commande correspondant à la contre-partie du service rendu.

Suivant une caractéristique l'enceinte anti vandalisme abritant les distributeurs comprend une assise massive de réduction du périmètre d'accés, et comprenant un mât axial anti enfoncement autour duquel est assemblée de façon indémontable à l'aide d'outils usuels ou contondants, l'enceinte, dont l'extrémité inférieure vient coiffer ladite assise, de préférence par embrèvement verrouillé en rotation, de manière à créer un espace coaxial au mât pour contenir les distributeurs du poste et leurs accessoires de commande.

Suivant une autre caractéristique l'enceinte abritant les distributeurs se présente sous forme d'une virole cylindrique dont la partie supérieure est fermée par une coupole anti effraction débordant le contour de l'enceinte, ladite coupole étant assujettie au mât et à l'assise par l'intermédiaire d'une tige filetée solidaire de la tête du mât et d'un écrou, de préférence à contour anti prise, appliquant la coupole et l'enceinte sur ladite assise.

Grâce à ces dispositions principales le poste de distribution est anti effraction, anti vandalisme, anti vol, il permet de rentabiliser des installations en les rendant fiables dans des conditions d'utilisations difficiles en dehors de surveillance constante.

Le dispositif de contrôle de consommation rémunérée encourage les communes à installer des terrains de stationnement pour les gens du voyage ou autres itinérants et en particulier reconstituer le parc des points d'eau qui ont pratiquement tous disparu en dehors des aires de repos des voies à grande circulation.

Le poste de distribution constitue une référence quantitative d'usagers ce qui permet de respecter les obligations des communes en matière de stationnement des itinérants tout en évitant les grosses concentralisations d'usagers préjudiciables à la qualité de la vie.

D'autres avantages apparaîtront encore à la lecture de la description détaillée qui suit, d'un mode de réalisation du poste de distribution, donné ici à titre d'exemple et représenté sur les dessins joints dans lesquels :

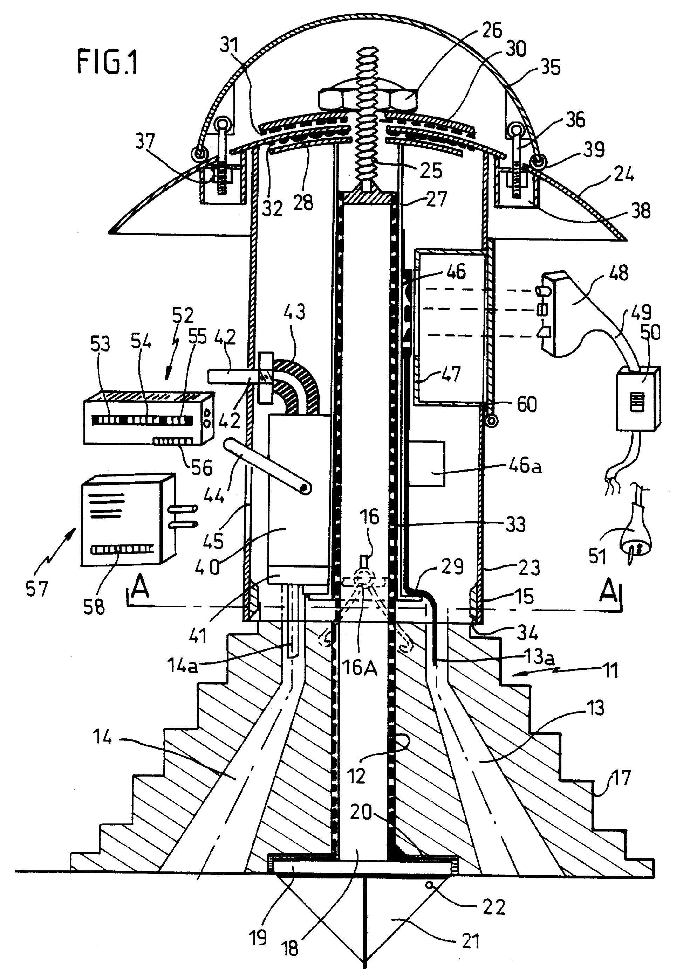

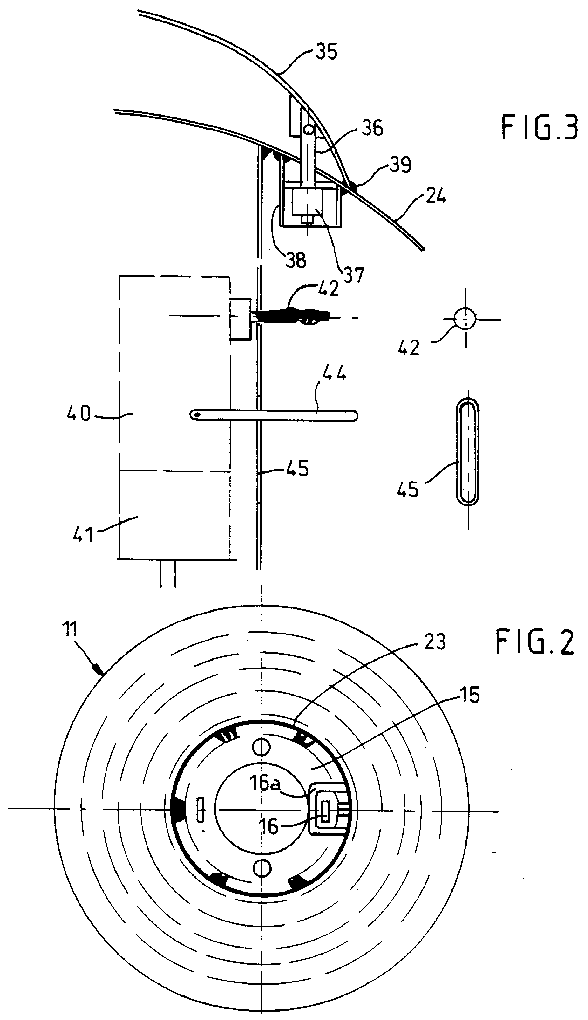

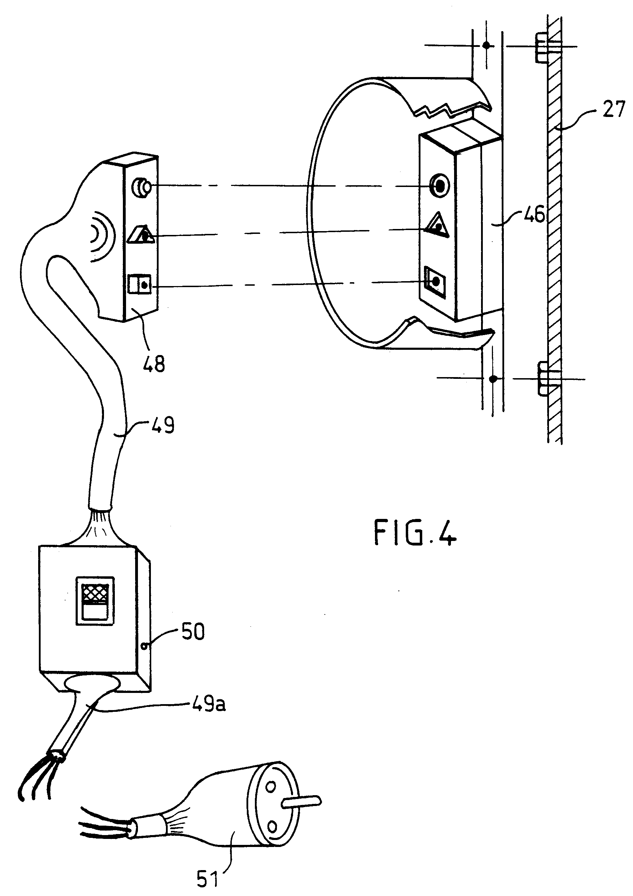

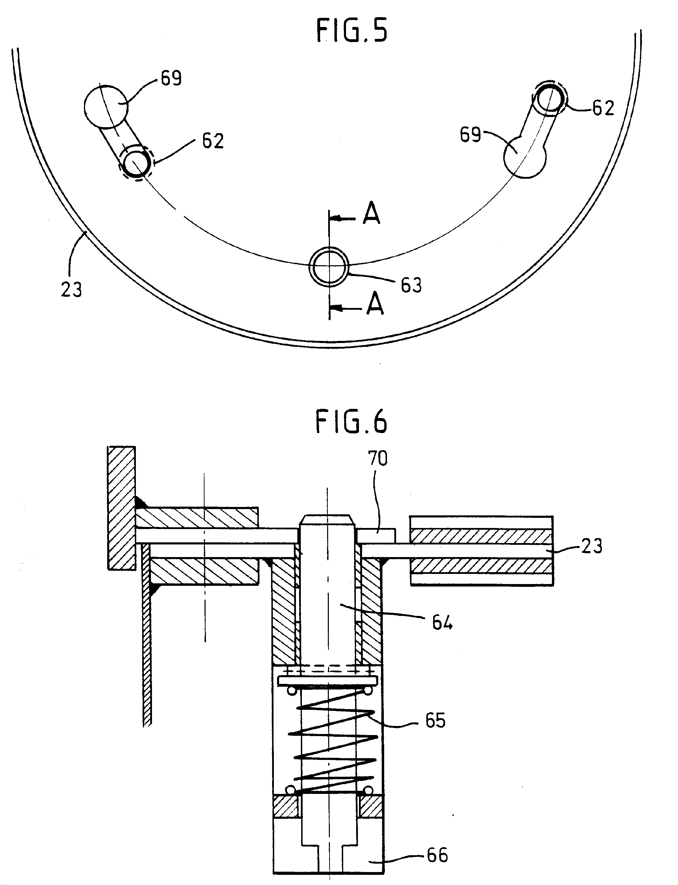

La figure 1, est une vue en élévation coupe montrant les différents composants du poste de distribution. La figure 2, est une vue en coupe du poste selon A-A de la figure 1. La figure 3, est une vue de détail montrant en élévation coupe partielle avec parties tronquées le mode de fixation de la seconde coupole. La figure 4, est une vue montrant la prise contact distributrice installée sur le poste et la prise utilisation. La figure 5 est une vue de dessus montrant un autre mode de fixation de la coupole sur l'enceinte. La figure 6 est une vue en coupe du mode de fixation suivant A-A de la figure 5.

Conformément à l'invention, ainsi que représenté figure 1, le poste de distribution d'eau et/ou de gaz et/ou de carburant et/ou d'électricité et/ou de tout autre fluide est désigné par la référence générale 10.

Suivant un mode de réalisation préféré, mais non limitatif, le poste de distribution anti vandalisme est constitué d'une assise massive 11, par exemple un bloc de béton inscrit dans un cercle d'allure générale tronconique. L'assise est traversée verticalement par un passage axial 12 destiné au passage d'un mât 18 qui sera décrit en détail plus loin. L'assise est également traversée par deux passages verticaux, respectivement 13-14 destinés à recevoir un conduit d'eau 14a et une ligne d'électricité 13a. Les conduits 13-14 sont d'allure générale tronconique, avec une grande base située en coïncidence avec le plan d'appui au sol de l'assise ce qui permet notamment les ajustements d'alignement avec les conduits d'approvisionnement du poste de distribution.

L'assise 11 comporte à son extrémité supérieure un palier épaulé 15, sur lequel s'emboîte à embrèvement l'enceinte qui contient les composants du poste. Il est prévu, noyés dans la matière constitutive du palier 15 de l'assise, des anneaux d'ancrage 16 servant, d'une part, aux opérations de manutention de l'assise tant pour le transport que pour l'installation sur site, d'autre part, de moyens d'immobilisation en rotation de l'enceinte raccordée à l'assise.

A l'extérieur, le profil de l'assise est de préférence en marche d'escalier 17 interdisant la pose de récipients de nature quelconque. Cette assise réduit le périmètre d'accés aux distributeurs de poste.

L'assise 11 peut affecter n'importe quelle autre forme et peut par exemple se présenter sous forme d'un tronc de cône ou de pyramide évidé à l'intérieur duquel les passages verticaux 13 et 14 destinés à recevoir le conduit d'eau 14a et la ligne d'électricité 13a ont été supprimés. La base du cône ou de la pyramide comporte des ouvertures que l'on dispose en alignement avec les conduits d'approvisionnement du poste de distribution au moment du montage du poste de distribution d'eau, d'électricité ou de gaz. De manière à stabiliser l'ensemble du poste de distribution, l'assise évidée est remplie par son extrémité supérieure de sable ou d'un autre matériau au moment de l'installation du poste de distribution. Cette autre forme de réalisation de l'assise facilite de par son poids le transport desdites assises et permet notamment leur gerbage.

L'assise, dans cette forme de réalisation simplifiée, comporte également à son extrémité supérieure un palier épaulé 15, sur lequel s'emboîte à embrèvement l'enceinte qui contient les composants du poste.

Le mât 18 qui traverse l'assise comporte à sa partie inférieure une platine d'appui 19 qui vient se loger dans un embrèvement 20 de l'assise. La platine est prolongée vers le bas d'une flèche 21 d'ancrage au sol mais qui sert également de prise de terre 22 pour l'installation électrique du poste de distribution.

Cette flèche 21 peut également présenter sur son contour extérieur un filetage permettant le vissage de ladite flèche 21 dans un socle taraudé enterré dans le sol.

Le mât 18 s'étend verticalement jusqu'au voisinage du sommet du poste de distribution pour l'assemblage de l'enceinte et du poste de l'assise.

L'enceinte 23 du poste se présente de préférence sous forme d'une virole cylindrique, par exemple un tube d'acier ou de matière plastique ou composite, en fonction de la destination d'usage du poste. La partie supérieure de la virole 23 est fermée par une première coupole 24 de préférence en forme de dôme débordant le contour de l'enceinte 23 pour former une protection anti effraction mais aussi une protection anti pluie.

La coupole 24 et par suite la virole 23 sont assujetties au mât 18 et à l'assise 11 par l'intermédiaire d'une tige filetée 25 solidaire de la tête de mât et d'un écrou 26 de préférence anti prise du genre de ceux par exemple, dits anti vol, utilisés par exemple pour la fixation des roues d'automobiles.

Suivant un mode d'exécution préféré, il est prévu en disposition coaxiale au mât 18 une entretoise tubulaire 27 surmontée d'une portion d'appui 28 épousant le plan d'appui de la coupole 24. L'entretoise 27 repose à sa base par une collerette d'appui 29 appliquée sur la partie supérieure de l'embrèvement 15 de l'assise 11.

Une platine d'appui complémentaire est interposée entre l'écrou 26 et la surface d'appui convexe de la coupole 24.

Suivant une disposition anti effraction, notamment à l'encontre des chocs, le corps principal de l'enceinte 23 ou virole, comporte au moins un amortisseur de chocs radial et un amortisseur de choc axial.

L'amortisseur axial est constitué de deux rondelles 31-32 en matière élastique disposées entre coupole 24 et tête d'entretoise 28 et coupole et plaque d'appui 30.

L'amortisseur radial est constitué, d'une part, d'un manchon élastique 33 disposé coaxialement au mât, entre mât 18 et entretoise 27, d'autre part, de plots élastiques 34 disposés entre la virole 23 du corps d'enceinte et le palier 15 de centrage de l'assise qui reçoit ladite virole.

Les moyens de fixation de la coupole 24 de l'enceinte sont enfermés dans une seconde coupole de protection 35 superposée à la première. Les coupoles 24 et 35 sont assujetties l'une à l'autre par des goujons filetés 36 cinématiquement solidaires de la seconde coupole pour faciliter le montage. Les goujons reçoivent des écrous anti prise à combinaison comme décrit plus haut, disposés dans des logements cylindriques 38 autorisant le serrage seulement avec une clé à combinaison homothétique de l'écrou 37. Avantageusement il est prévu un joint d'étanchéité 39 entre les coupoles 24 et 35.

Selon une autre forme de réalisation de l'invention, les coupoles 24 et 35 constituent une seule et même pièce 24 en forme de dôme débordant légèrement le contour de l'enceinte 23. Ladite pièce 24 assujettie au mât 18 et à l'assise 11 par l'intermédiaire d'une tige filetée 25 comme cela a été décrit précédemment comporte également sur son pourtour intérieur au moins deux pions 62 et une lumière. L'extrémité supérieure de l'enceinte 23 comporte un rebord intérieur équipé d'au moins deux lumières 69 de forme oblongue conformément à la figure 5, lesdites lumières étant destinées à recevoir les pions 62 de la coupole 24. Les pions 62 sont introduits dans la section circulaire de grand diamètre des lumières 69 et sont ensuite amenés par rotation de la coupole 24 dans la partie allongée extrême de la lumière 69. Dans cette position qui est celle représentée à la figure 5, les pions verrouillent la coupole 24 à l'enceinte 23. En effet, ces pions 62 possèdent une portion périphérique saillante qui les retient à l'intérieur de la lumière 69. L'enceinte 23 comporte également au niveau de ce rebord intérieur un orifice 63 destiné à venir en regard de la lumière de la coupole 24 en position verrouillée de la coupole 24 sur l'enceinte 23. Cet orifice 63 est prolongé vers l'intérieur de l'enceinte 23 par un fourreau de guidage représenté à la figure 6. Ce fourreau de guidage ménage une cavité à l'intérieur de laquelle peut se déplacer un pion 64, ledit pion reposant sur une embase elle-même reliée à un ressort 65. Le déplacement dudit pion 64 est commandé par un électro-aimant non représenté qui est situé en position 66. En position de repos, c'est-à-dire de non excitation (ou non alimentation) de l'électro-aimant, le pion 64 se trouve dans la position représentée à la figure 6. Dans cette position, le pion 64 traverse l'orifice 63 de l'enceinte 23 et la lumière de la coupole 24 de telle sorte qu'il empêche la rotation de la coupole 24 par rapport à l'enceinte 23. Or dans cette position, les pions 62 sont disposés en position verrouillée conformément à la figure 5. Par conséquent le déverrouillage ou la désolidarisation de l'enceinte 23 et de la pièce 68 ne pourra être réalisé que lors de l'excitation ou l'alimentation de l'électro-aimant qui permettra le déplacement du pion 64 vers le bas dans la figure 6 de manière à laisser la coupole 24 tourner par rapport à l'enceinte 23. Cette alimentation de l'électro-aimant s'effectue à distance par une personne habilitée. Grâce à ce dispositif de verrouillage à commande électrique l'inviolabilité de la borne est assurée. Bien évidemment d'autres dispositifs de verrouillage peuvent être mis en oeuvre.

L'enceinte du poste contient un distributeur d'eau 40 par exemple une vanne quart de tour 40 reliée au conduit d'alimentation 14a avec interposition d'une électrovanne 41, cette électrovanne étant susceptible d'être commandée à faible distance par une consigne magnétique ou à infra-rouge qui sera décrite en détail plus loin.

La sortie de la vanne 40 débouche à l'extérieur de la virole 23 par l'intermédiaire d'un conduit souple 42 se raccordant de façon amovible à la sortie 43 de la vanne. La commande manuelle de la vanne est constituée d'un levier plat 44 passant au travers d'une fenêtre étroite 45 de manière à interdire l'accés au corps de vanne.

Le montage du conduit de distribution d'eau est réalisé élastiquement flottant.

L'enceinte du poste contient également une prise de distribution électrique 46 du type à connexion magnétique en soi connue. L'accés à cette prise se fait par l'intermédiaire d'un logement de guidage tubulaire 47 dont la section est homothétique de la section de la prise utilisation 48. Le logement de guidage tubulaire 47 est obstrué par exemple par une trappe d'accés 60. Cette trappe comporte avantageusement un levier de réarmement (non représenté) conçu de manière telle que lorsqu'on ouvre la trappe pour avoir accés à la prise de courant 46, ledit levier actionne le réarmement d'un disjoncteur disposé à l'intérieur de l'enceinte au voisinage de la prise de courant. Ladite trappe comporte également un moyen de rappel tel qu'un ressort qui permet de ramener la trappe en position de fermeture, c'est-à-dire en position d'obstruction du logement de guidage 47. La trappe et ses caractéristiques constructives permettent d'éviter la destruction de la prise de distribution électrique 46 par vandalisme ainsi que sa protection contre les intempéries. Il est prévu, en amont de la prise de distribution 46 un interrupteur 46a à commande magnétique ou infra-rouge. La prise utilisation 48 est prolongée d'un conducteur 49 interrompu par un disjoncteur 50 lui-même prolongé d'un conducteur 49a terminé par une prise classique normalisée 51.

L'électrovanne 41 et l'interrupteur 46a sont commandés à faible distance par une consigne magnétique 52.

Cette consigne, contre remise d'un prix d'utilisation, autorise l'usage du poste de distribution.

On fera comporter à la consigne, mais non limitativement un compteur 53 de droit de place à mémoire, un compteur 54 à réserve de consommation d'électricité, un compteur 55 à réserve de consommation d'eau ainsi qu'un totalisateur 56 de solde de la partie de réserve non consommée.

La consigne, préalablement chargée, est confiée à l'utilisateur contre paiement lequel peut alors utiliser le poste jusqu'à épuisement des réserves dont il dispose.

La consigne 52 coopère avec un générateur de charge 57 ou de traitement, à disposition du gestionnaire du ou des postes de distribution. Le générateur comporte un clavier numérique 58 permettant d'afficher sur la consigne 52 les réserves de droit de place, électricité et eau, acquises par l'utilisateur.

Bien entendu, l'invention n'est pas limitée à l'exemple de réalisation ci-dessus décrit et représenté, pour lequel on pourra prévoir d'autres variantes sans pour cela sortir du cadre des revendications annexées.

Ainsi, par exemple, le verrouillage, en rotation du corps de distributeur par rapport à l'assise peut être obtenu par au moins un anneau 16a solidaire de la virole 23 et venant enfermer la tête des anneaux d'ancrage 16 de l'assise.

De la même manière, on peut concevoir un autre mode de réalisation de la consigne 52 dès l'instant qu'elle autorise un débit à partir d'une ou plusieurs réserves de consommation jusqu'à épuisement desdites réserves.

Ce poste peut s'appliquer à la distribution d'autres services et peut renfermer des câbles de télévision, de téléphone, etc.

De même, les sites d'installation de ce poste de distribution sont multiples. On peut en énumérer à titre non limitatif un certain nombre tel que les aires portuaires, les aires de stationnement sans gardiennage, les hôpitaux notamment pour la distribution d'oxygène, etc.

Les conduits de distribution d'eau décrits ci-dessus pourront être modifiés et faire l'objet des adaptations nécessaires afin de pouvoir permettre la distribution de gaz, de carburant ou de tout autre fluide sans sortir du cadre de l'invention.

## Revendications

1. Poste de distribution d'eau et/ou de gaz et/ou de carburant et/ou d'électricité et/ou de tout autre fluide, notamment pour aires de stationnement sans gardiennage,
poste de distribution (10) caractérisé en ce qu'il comporte une enceinte anti-vandalisme (23) abritant au moins un distributeur d'eau (40) ou de gaz ou de carburant ou de tout autre fluide et/ou un distributeur d'électricité (46), ledit distributeur (40) d'eau ou de gaz ou de carburant ou de tout autre fluide comprenant une vanne ou robinet alimenté par un dispositif (41) de contrôle de débit autorisé par un moyen de commande (52) correspondant à la contre-partie du paiement du service rendu, ledit distributeur d'électricité (46) débitant également sous l'action d'un moyen de commande (46a) correspondant à la contre-partie du service rendu.

2. Poste de distribution d'eau et/ou de gaz et/ou de carburant et/ou d'électricité et/ou de tout autre fluide selon la revendication 1,
caractérisé en ce que l'enceinte anti vandalisme (23) abritant les distributeurs comprend une assise massive (11) de réduction du périmètre d'accés, et comprenant un mât axial (18) anti-enfoncement autour duquel est assemblée de façon indémontable à l'aide d'outils usuels ou contondants, l'enceinte (23) dont l'extrémité inférieure vient coiffer ladite assise, de préférence par embrèvement verrouillé .en rotation, de manière à créer un espace coaxial au mât (18) pour contenir les distributeurs (40,46) du poste et leurs accessoires de commande.

3. Poste de distribution d'eau et/ou de gaz et/ou de carburant et/ou d'électricité et/ou de tout autre fluide selon les revendications 1 et 2,
caractérisé en ce que l'enceinte (23) abritant les distributeurs se présente sous forme d'une virole cylindrique dont la partie supérieure est fermée par une coupole (24) anti effraction débordant le contour de l'enceinte, ladite coupole étant assujettie au mât (18) et à l'assise (11) par l'intermédiaire d'une tige filetée (25) solidaire de la tête du mât (18) et d'un écrou (26), de préférence à contour anti prise, appliquant la coupole (24) et l'enceinte (23) sur ladite assise.

4. Poste de distribution d'eau et/ou de gaz et/ou de carburant et/ou d'électricité et/ou de tout autre fluide selon l'une des quelconque des revendications 1 à 3,
caractérisé en ce qu'il est prévu en disposition coaxiale au mât (18) une entretoise tubulaire (27) prenant appui d'une part sur l'assise (11) du poste, d'autre part sous la coupole (24) anti effraction.

5. Poste de distribution d'eau et/ou de gaz et/ou de carburant et/ou d'électricité et/ou de tout autre fluide selon l'une quelconque des revendications 1 à 4,
caractérisé en ce que la virole cylindrique (23) constituant le corps principal de l'enceinte comporte au moins un amortisseur de choc axial (31-32) et/ou au moins un amortisseur de choc radial (33-34), l'amortisseur axial étant constitué de blocs (31-32) en matériau élastique disposés entre coupole (24) et tête (28) d'entretoise de mât, tandis que l'amortisseur radial est constitué, d'une part, d'un manchon élastique (33) disposé coaxialement au mât (18), entre mât et entretoise, d'autre part, de plots élastiques (34) disposés entre virole cylindrique du corps d'enceinte et le sommet de centrage (15) de l'assise (11).

6. Poste de distribution d'eau et/ou de gaz et/ou de carburant et/ou d'électricité et/ou de tout autre fluide selon l'une quelconque des revendications 1 à 5,
caractérisé en ce que les moyens de fixation de la coupole (24) de l'enceinte sont enfermés dans une seconde coupole (35) de protection, superposée à la première, les deux coupoles étant assujetties l'une à l'autre de préférence par des goujons filetés (36) solidaires de ladite seconde coupole et des écrous anti prise (37) à combinaison disposés dans des logements cylindriques (38) autorisant l'accés à une clé de serrage spécifique.

7. Poste de distribution d'eau et/ou de gaz et/ou de carburant et/ou d'électricité et/ou de tout autre fluide selon l'une quelconque des revendications 1 à 5,
caractérisé en ce que la coupole (24) est fixée sur l'enceinte (23) au moyen d'un encliquetage mécanique (62, 69) déverrouillable par rotation de la coupole (24) sur l'enceinte (23), ladite rotation étant réalisée par rétraction d'un pion (64) vers l'intérieur de l'enceinte (23), le déplacement dudit pion (64) étant commandé par un électro-aimant relié à une commande électrique disposée à distance du poste de distribution.

8. Poste de distribution d'eau et/ou de gaz et/ou de carburant et/ou d'électricité et/ou de tout autre fluide selon la revendication 1,
caractérisé en ce que le dispositif de contrôle de débit d'eau autorisé est constitué par une électrovanne (41) disposée en amont du robinet ou de la vanne à commande manuelle, cette électrovanne (41) étant commandée à distance de préférence par une consigne magnétique (52) de proximité incluant une mémoire à réserve de consommation.

9. Poste de distribution d'eau et/ou de gaz et/ou de carburant et/ou d'électricité et/ou de tout autre fluide selon l'une des revendications 1 à 8,
caractérisé en ce que le dispositif de contrôle du débit d'électricité autorisé est constitué d'un interrupteur (46a) commandé à distance de préférence par une consigne magnétique (52) de proximité incluant une mémoire à réserve de consommation.

10. Poste de distribution d'eau et/ou de gaz et/ou de carburant et/ou d'électricité et/ou de tout autre fluide selon l'une quelconque des revendications 1 à 9,
caractérisé en ce que le conduit (42) de distribution d'eau est monté élastiquement flottant entre vanne ou robinet (40) et l'enceinte (23) du poste.

11. Poste de distribution d'eau et/ou de gaz et/ou de carburant et/ou d'électricité et/ou de tout autre fluide selon l'une quelconque des revendications 1 à 9,
caractérisé en ce que la prise (46) distributrice de courant électrique et la prise utilisatrice (48) sont du type à connexion magnétique.

12. Poste de distribution d'eau et/ou de gaz et/ou de carburant et/ou d'électricité et/ou de tout autre fluide selon l'une quelconque des revendications 1 à 11,
caractérisé en ce que la consigne magnétique (52) de proximité comprend un compteur (53) à mémoire de droit de place, un compteur (54) à réserve de consommation d'électricité, un compteur(55) à réserve de consommation d'eau, un totaliseur (56) du solde de la partie de réserve non consommée, cette consigne coopérant avec un générateur (57) de recharge permettant l'affichage d'une réserve de consommation sur la consigne magnétique (52).

## Patentansprüche

1. Verteilerstation für Wasser und/oder Gas und/oder Brennstoff und/oder Elektrizität und/oder eine beliebige andere Flüssigkeit, insbesondere zur Aufstellung in Bereichen ohne Bewachung, **dadurch gekennzeichnet,** daß sie ein Gehäuse zum Schutz gegen Vandalismus (23) aufweist, das wenigstens eine Abgabeeinrichtung für Wasser (40) oder für Gas oder für Brennstoff oder für eine beliebige andere Flüssigkeit und/oder eine Abgabeeinrichtung für Elektrizität (46) aufweist, wobei genannte Abgabeeinrichtung (40) für Wasser oder für Gas oder für Brennstoff oder für eine beliebige andere Flüssigkeit einen Schieber oder ein Ventil aufweist, das über eine Vorrichtung (41) zur Kontrolle einer Durchflußmenge, die über Steuerungsmittel (52) bewilligt wird und die der Gegenleistung für die Bezahlung der gelieferten Dienstleistung entspricht, gespeist wird und wobei genannte Abgabeeinrichtung für Elektrizität (46) ebenfalls unter der Wirkung von Steuerungsmitteln (46a) entsprechend der Gegenleistung für die gelieferte Dienstleistung liefert.

2. Verteilerstation für Wasser und/oder Gas und/oder Brennstoff und/oder Elektrizität und/oder eine beliebige andere Flüssigkeit nach Anspruch 1, **dadurch gekenn****zeichnet,** daß das Gehäuse zum Schutz gegen Vandalismus (23), das die Abgabeeinrichtungen aufnimmt, einen massiven Unterbau (11) zur Reduzierung des zugänglichen Umkreises aufweist, wobei ein axialer Mast (18) gegen Umstoßen vorgesehen ist, um den herum das Gehäuse (23), dessen unteres Ende genannten Unterbau abdeckt, vorzugsweise mit einem gegen Drehbewegung verriegelten Absatz, in mit gewöhnlichen oder stumpfen Werkzeugen nicht demontierbarer Weise befestigt ist, derart, daß ein zu dem Mast (18) koaxialer Raum zur Aufnahme der Abgabeeinrichtungen (40-46) der Station und ihrer Steuereinrichtungen geschaffen ist.

3. Verteilerstation für Wasser und/oder Gas und/oder Brennstoff und/oder Elektrizität und/oder eine beliebige andere Flüssigkeit nach einem der Ansprüche 1 und 2, **dadurch gekennzeichnet**, daß das Gehäuse (23), das die Abgabeeinrichtungen aufnimmt, die Form eines zylindrischen Ringes hat, dessen oberer Teil durch eine Kuppel (24) gegen Aufbrechen verschlossen ist, wobei die Kuppel auf dem Rand des Gehäuses aufliegt und wobei genannte Kuppel an dem Mast (18) und an dem Unterbau (11) durch Zwischenverbindung mit einer Gewindestange (25), die mit dem oberen Ende des Mastes (18) fest verbunden ist, und mit einer Mutter (26), vorzugsweise von diebstahlsicherer Ausführung, befestigt ist, wobei diese die Kuppel (24) und das Gehäuse (23) an genanntem Unterbau befestigen.

4. Verteilerstation für Wasser und/oder Gas und/oder Brennstoff und/oder Elektrizität und/oder eine beliebige andere Flüssigkeit nach einem der Ansprüche 1 bis 3, **dadurch gekennzeichnet,** daß in zu dem Mast (18) koaxialer Anordnung ein rohrförmiges Zwischenstück (27) vorgesehen ist, das sich mit einem Ende an dem Unterbau (11) der Station und mit dem anderen Ende unter der Kuppel (24) gegen Aufbrechen abstützt.

5. Verteilerstation für Wasser und/oder Gas und/oder Brennstoff und/oder Elektrizität und/oder eine beliebige andere Flüssigkeit nach einem der Ansprüche 1 bis 4, **dadurch gekennzeichnet**, daß der zylindrische Ring (23), der den Grundkörper des Gehäuses bildet, wenigstens einen axialen Stoßdämpfer (31-32) und/oder wenigstens einen radialen Stoßdämpfer (33-34) aufweist, wobei der axiale Stoßdämpfer durch Blöcke (31-32) aus verformbarem Material gebildet ist, die zwischen der Kuppel (24) und dem oberen Ende (28) des Zwischenstückes des Mastes angeordnet sind, während der radiale Stoßdämpfer einerseits durch eine verformbare Hülse (33) gebildet ist, die koaxial zu dem Mast (18) zwischen Mast und Zwischenstück angeordnet ist, andererseits durch verformbare Puffer (34), die zwischen dem zylindrischen Ring des Körpers des Gehäuses und dem zentrierenden oberen Teil (15) des Unterbaus (11) angeordnet sind.

6. Verteilerstation für Wasser und/oder Gas und/oder Brennstoff und/oder Elektrizität und/oder eine beliebige andere Flüssigkeit nach einem der Ansprüche 1 bis 5, **dadurch gekennzeichnet,** daß die Mittel zur Befestigung der Kuppel (24) des Gehäuses in einer zweiten Schutzkuppel (35) eingeschlossen sind, die auf die erste aufgesetzt ist, wobei die zwei Kuppeln miteinander verbunden sind vorzugsweise durch Stiftschrauben (36), die mit genannter zweiter Kuppel fest verbunden sind, und durch diebstahlsichere Muttern (37), die zusammen in zylindrischen Aufnahmen (38) angeordnet sind und die den Zugang mit einem besonderen Schraubenschlüssel erlauben.

7. Verteilerstation für Wasser und/oder Gas und/oder Brennstoff und/oder Elektrizität und/oder eine beliebige andere Flüssigkeit nach einem der Ansprüche 1 bis 5, **dadurch gekennzeichnet,** daß die Kuppel (24) auf dem Gehäuse (23) mittels eines mechanischen Rastmittels (62, 69) befestigt ist, das durch Drehung der Kuppel (24) an dem Gehäuse (23) entriegelbar ist, wobei genannte Drehung durch Zurückziehen eines Stiftes (64) in das Innere des Gehäuses (23) ermöglicht ist, wobei das Ausrücken genannten Stiftes (64) durch einen Elektromagneten gesteuert ist, der mit einer elektrischen Steuerung verbunden ist, die entfernt von der Verteilerstation angeordnet ist.

8. Verteilerstation für Wasser und/oder Gas und/oder Brennstoff und/oder Elektrizität und/oder eine beliebige andere Flüssigkeit nach Anspruch 1, **dadurch gekenn****zeichnet,** daß die Vorrichtung zur Kontrolle der bewilligten Durchflußmenge an Wasser durch ein Magnetventil (41) gebildet ist, das in Flußrichtung vor dem Schieber oder dem Ventil zur manuellen Steuerung angeordnet ist, wobei genanntes Magnetventil (41) ferngesteuert ist, vorzugsweise durch einen magnetischen Sollwertgeber (52), der einen Speicher für den Vorrat des Verbrauchs aufweist.

9. Verteilerstation für Wasser und/oder Gas und/oder Brennstoff und/oder Elektrizität und/oder eine beliebige andere Flüssigkeit nach einem der Ansprüche 1 bis 8, **dadurch gekennzeichnet,** daß die Vorrichtung zur Kontrolle der bewilligten Abgabemenge an Elektrizität durch einen Schalter (46a) gebildet ist, der ferngesteuert ist, vorzugsweise durch einen magnetischen Sollwertgeber (52) geringer Reichweite, der einen Speicher für den Vorrat des Verbrauchs aufweist.

10. Verteilerstation für Wasser und/oder Gas und/oder Brennstoff und/oder Elektrizität und/oder eine beliebige andere Flüssigkeit nach einem der Ansprüche 1 bis 9, **dadurch gekennzeichnet**, daß die Leitung (42) zur Abgabe von Wasser zwischen dem Schieber oder Ventil (40) und dem Gehäuse (23) der Station elatisch bewegbar angebracht ist.

11. Verteilerstation für Wasser und/oder Gas und/oder Brennstoff und/oder Elektrizität und/oder eine beliebige andere Flüssigkeit nach einem der Ansprüche 1 bis 9, **dadurch gekennzeichnet**, daß der Verteileranschluß (46) für elektrischen Strom und der Benutzeranschluß (48) von magnetisch verbundener Art sind.

12. Verteilerstation für Wasser und/oder Gas und/oder Brennstoff und/oder Elektrizität und/oder eine beliebige andere Flüssigkeit nach einem der Ansprüche 1 bis 11, **dadurch gekennzeichnet,** daß der magnetische Sollwertgeber (52) einen Zähler (53) mit Speicher für Platzgebühren, einen Zähler (54) für den Vorrat des Verbrauchs an Elektrizität, einen Zähler (55) für den Vorrat des Verbrauchs an Wasser, ein Summenzählwerk (56) für den Restbetrag des nicht verbrauchten Teiles des Vorrates aufweist, wobei genannter Sollwertgeber mit einem Generator (57) zum Wiederaufladen zusammenwirkt, der das Anzeigen eines Vorrates des Verbrauchs an dem magnetischen Sollwertgeber (52) erlaubt.

## Claims

1. Distribution station for water and/or gas and/or motor fuel and/or electricity and/or any other fluid, in particular for unstaffed parking areas,
distribution station (10) characterised in that it comprises an anti-vandalism casing (23) protecting at least one distribution point for water (40) or gas or motor fuel or any other fluid and/or an electricity distribution point (46), the said distribution point (40) for water or gas or motor fuel or any other fluid comprising a valve or tap supplied by a device (41) for controlling the output permitted by control means (52) corresponding to the value of the payment for the service rendered, the said electricity distribution point (46) also producing an output under the control of a control means (46a) corresponding to the value of the service rendered.

2. Distribution station for water and/or gas and/or motor fuel and/or electricity and/or any other fluid according to claim 1,
characterised in that the anti-vandalism casing (23) protecting the distribution points comprises a solid base (11) reducing the access perimeter and comprising an axial pole (18) to protect against the demolition of the station, around which pole, in a non-removable manner with the aid of customary or contusive tools, the casing (23) is assembled, of which the lower end overlaps the said base, preferably by a rotationally threaded internal recess, in such a way as to create a space coaxial to the pole (18) to contain the distribution points (40, 46) of the station and their controls.

3. Distribution station for water and/or gas and/or motor fuel and/or electricity and/or any other fluid according to claims 1 and 2,
characterised in that the casing (23) protecting the distribution points is in the form of a cylindrical barrel of which the upper part is closed by a tamper-proof dome (24) protruding beyond the contour of the casing, the said dome being firmly fixed to the pole (18) and to the base (11) by means of a threaded bar (25) which is solidly fixed to the head of the pole (18) and by means of a nut (26), preferably with an anti-grip contour, mounting the dome (24) and the casing (23) on the said base.

4. Distribution station for water and/or gas and/or motor fuel and/or electricity and/or any other fluid according to any one of claims 1 to 3,
characterised in that a tubular strut (27) is provided coaxially disposed to the pole (18) and bearing at one end against the base (11) of the station, at the other end under the tamper-proof dome (24).

5. Distribution station for water and/or gas and/or motor fuel and/or electricity and/or any other fluid according to any one of claims 1 to 4,
characterised in that the cylindrical barrel (23) comprising the main body of the casing comprises at least one axial shock absorber (31-32) and/or at least one radial shock absorber (33-34), the axial shock absorber being comprised of blocks (31-32) of elastic material disposed between the dome (24) and the head (28) of the pole strut, while the radial shock absorber is comprised, on the one hand, of an elastic sleeve (33) disposed coaxially to the pole (18) between the pole and the strut, and on the other hand, of elastic studs (34) disposed between the cylindrical barrel of the body of the casing and the centring peak (15) of the base (11).

6. Distribution station for water and/or gas and/or motor fuel and/or electricity and/or any other fluid according to any one of claims 1 to 5,
characterised in that the fixing means of the dome (24) of the casing are enclosed inside a second protective dome (35) placed over the first, the two domes being firmly fixed to each other preferably by threaded bolts (36) which are firmly fixed to the said second dome and combined anti-grip nuts (37) disposed in cylindrical housings (38) permitting access to a specific chuck key.

7. Distribution station for water and/or gas and/or motor fuel and/or electricity and/or any other fluid according to any one of claims 1 to 5,
characterised in that the dome (24) is fixed onto the casing (23) by means of a mechanical catch mechanism (62, 69) which can be unlocked by rotation of the dome (24) on the casing (23), the said rotation being achieved by retraction of a piece (64) towards the inside of the casing (23), the displacement of the said piece (64) being controlled by an electromagnet connected to an electrical control disposed at a distance from the distribution station.

8. Distribution station for water and/or gas and/or motor fuel and/or electricity and/or any other fluid according to claim 1,
characterised in that the control device for the permitted output of water is comprised of a solenoid valve (41) disposed upstream of the tap or of the manually controlled valve, this solenoid valve (41) being remote controlled preferably by a nearby magnetic control point (52) including a memory for the reserves to be consumed.

9. Distribution station for water and/or gas and/or motor fuel and/or electricity and/or any other fluid according to one of claims 1 to 8,
characterised in that the control device for the permitted electricity output is comprised of a switch (46a) remote controlled preferably by a nearby magnetic control point (52) including a memory for the reserves to be consumed.

10. Distribution station for water and/or gas and/or motor fuel and/or electricity and/or any other fluid according to any one of claims 1 to 9,
characterised in that the water distribution conduit (42) is mounted in an elastically mobile manner between the valve or the tap (40) and the casing (23) of the station.

11. Distribution station for water and/or gas and/or motor fuel and/or electricity and/or any other fluid according to any one of claims 1 to 9,
characterised in that the electricity distribution point (46) and the consumer's plug (48) are of the type having a magnetic connection.

12. Distribution station for water and/or gas and/or motor fuel and/or electricity and/or any other fluid according to any one of claims 1 to 11,
characterised in that the nearby magnetic control point (52) comprises a counter (53) with a memory for the right to use the place, a counter (54) for the reserves of electricity to be consumed, a counter (55) for the reserves of water to be consumed, a totaliser (56) of the balance of the part remaining unconsumed, this control point cooperating with a reload generator (57) permitting a reserve of consumption to be displayed on the magnetic control point (52).
